# EUROPEAN PATENT APPLICATION

(11) **EP 2 546 514 A1**
(43) Date of publication of application: **16.01.2013**
(21) Application number: 10714651.6
(22) Date of filing: 09.03.2010
(51) Int. Cl.: F03D 9/02, F03B 13/06, F03B 15/00

(54) **CONTROL METHOD AND SYSTEM FOR HYDRAULIC WIND FARMS WITH PUMPED ACCUMULATION**

(71) Applicant: Endesa Generación, S. A., 41004 Sevilla (ES)
(72) Inventor: PLATERO GAONA, Carlos Antonio, 41004 Sevilla (ES); BLAZQUEZ GARCÍA, Francisco, 41004 Sevilla (ES); RODRÍGUEZ ARRIBAS, Jaime, 41004 Sevilla (ES); BALLESTEROS APARICIO, Juan Carlos, 41004 Sevilla (ES); VEGANZONES NICOLÁS, Carlos, 41004 Sevilla (ES); MARTÍNEZ GONZALEZ, Sergio, 41004 Sevilla (ES); RAMIREZ PRIETO, Dionisio, 41004 Sevilla (ES)
(74) Representative: Pons Ariño, Angel
(86) International application number: PCT/ES2010/070133
(87) International publication number: WO 2011/110698

(57) **Abstract**

The system can work in zero-flow operation mode, which involves closing the flow control elements or injectors (6) that reduce the flow turbined by the hydraulic unit (1) to zero, or in frequency-regulated operation, in which a drop in the frequency of the grid or in the derivative of the frequency or in the speed or in the derivative of the speed of the hydraulic unit or in a combination of these values in relation to some thresholds quickly opens the flow control elements or injectors (6) to generate and supply power to the grid (2) almost instantly

## Description

### OBJECT OF THE INVENTION

The present invention is applicable for controlling and regulating the speed of Pelton-type hydraulic power units, being valid for any type of hydraulic power plant, particularly those located in weak networks.

It is especially applicable to pumped-storage wind-hydro power plants and has the object of controlling and regulating turbine speed, in such a manner as to increase the penetration of wind energy in wind-hydro systems with the object of increasing the reliability and improving the efficiency of the power supplied by said systems.

### BACKGROUND OF THE INVENTION

Energy supply stemming from wind power units is not sufficiently reliable due to the nature of the primary energy source.

Therefore, in the event of installing wind power units on islands or isolated networks, the percentage of wind energy should not be too high so that the power supply continues in the event of lack of wind. Therefore, generator power units of a nature other than wind power units should be kept in reserve.

In the case of wind-hydro power plants, the supply should ideally be carried out with the maximum wind-generated energy, complemented with hydraulic turbines, in such a manner as to guarantee said supply in the event of lack of wind. As a consequence of the startup of the hydraulic power unit, in the event that wind conditions vary, on one hand, all of the wind energy may not be leveraged while, on the other, in the event of lack of wind the power supply could be interrupted due to lack of generation.

In the event that the demand for wind energy exceeds generation, the frequency of the system and therefore the speed of the generators connected thereto would decrease.

In order to avoid an unacceptable drop in system frequency and prevent it from collapsing, frequency relays are normally used to cause the disconnection of some consumers, in such a manner that the power generated is the same as that demanded and the frequency can return to its assigned value. In this manner, the quality of the power supply remains within the established frequency limits.

In the case of pumped-storage wind-hydro power plants, wind energy may be stored in the form of potential water energy by means of pumps. This energy will then be transformed into electrical energy by means of turbines. However, losses occur in each of these energy transformations and global plant efficiency decreases considerably. The efficiency of these types of power plants therefore increases the greater the wind energy that passes directly to the network.

International application for patent of invention WO02084116 discloses a hydroelectric power plant that uses a plurality of wind turbines connected to compressed-air generators to produce pressurised air. Said pressurised air is used to impel water through a turbine to produce electrical energy. The water is recycled and the plant includes a compressed air reserve tank that will allow the plant to continue operating when the wind levels are insufficient to produce highly compressed air. The plant is designed to operate continuously using wind energy. When the wind ceases to blow and the reserve capacity becomes exhausted, electricity from a local supplier is used and when excess energy is produced it can be returned to the supplier's network.

### DESCRIPTION OF THE INVENTION

The present invention allows optimisation of the operation of Pelton-type hydraulic power units directly applied to increasing wind penetration in pumped-storage wind-hydro power plants in order to increase global plant efficiency.

The method proposed enables operation of the power unit connected to the grid at the assigned speed and without flow in the turbine, in such a manner that the power unit is prepared to deliver power quickly upon request.

The system consists of a speed regulator, a switching module and a control module.

The switching module enables selection of the exit signal stemming from the speed regulator or a signal that causes the flow in the turbine to be null, while the control module selects the operating mode.

Operation of the power unit, in accordance with this method, consists of the following modes:

### ● Startup mode

The speed regulator modifies the speed of the power unit from zero speed to the assigned speed, to which end it will regulate the necessary water flow. The power unit is then connected to the grid

### ● Null flow operating mode

Upon connecting the power unit to the grid, the speed control system will close the flow control element or injectors so that the flow is null, going into null flow operating mode. At that point the power unit will operate connected to the grid.

The power unit is prepared to quickly deliver electric power in the event that it is required by the electric power system. In this situation, the energy supply is carried out by other non-storable energy sources, such as wind power units. However, in the event of lack of this non-storable energy (lack of wind) and consequent lack of electric power, system frequency will drop and, consequently, generator speed. At this point the hydraulic power unit will pass into frequency regulation mode, supplying power to the grid.

### ● Frequency regulation operating mode

After the drop in the frequency of the electrical system, which is equivalent to a drop in the speed of the power unit, as once said power unit is connected to the grid, frequency and speed are identical in unit magnitudes, the speed control system passes from regulating the null flow to regulating system speed. To this end and in the view of the lack of electric power in the system, the turbine injector or injectors will be opened and the generator will therefore supply power to the electrical system, in such a manner that system frequency will consequently increase.

The passage to this regulation mode can be carried out due to the fact that the frequency of the system drops below a certain value or because the frequency derivative is less than a predetermined value.

The passage can be made in an identical manner using a drop in power unit speed or speed derivative.

Once the supply of the main energy source, in this case wind, has been recovered, the load in the hydraulic power unit will decrease, as the frequency is being regulated. When the power is sufficiently low, passage to null flow operating mode may be carried out voluntarily, leaving the power unit prepared to switch to frequency regulation mode again.

Therefore, the switch from null flow operating mode to frequency regulation operation mode occurs when the frequency of the grid or speed of the power unit drops to below a predetermined value (it is the same physical phenomenon) or when the frequency derivative or speed derivative of the power unit (the same physical phenomenon) is less than a previously programmed value. In this manner, the control system anticipates the problem of an excessive drop in frequency that can be produced by the action of the unloading relays.

### BRIEF DESCRIPTION OF THE DRAWINGS

In order to complement this description and with the object of helping to better understand the characteristics of the invention, a set of drawings, in accordance with a preferred example of practical embodiment thereof, has been included as an integral part of said description, wherein the following has been represented in an illustrative and non-limiting manner:
Figure 1 shows a possible configuration of the system for controlling and regulating the speed of Pelton-type hydraulic power units.
Figure 2 shows a temporal representation of the evolution of certain variables of a hydraulic power unit using the proposed operating method, based on switching caused by the drop in frequency or speed of the power unit below a pre-established value.
Figure 3 shows a schematic representation of a wind-hydro power plant.

### PREFERRED EMBODIMENT OF THE INVENTION

A preferred method of embodiment of the object of the invention is described below.

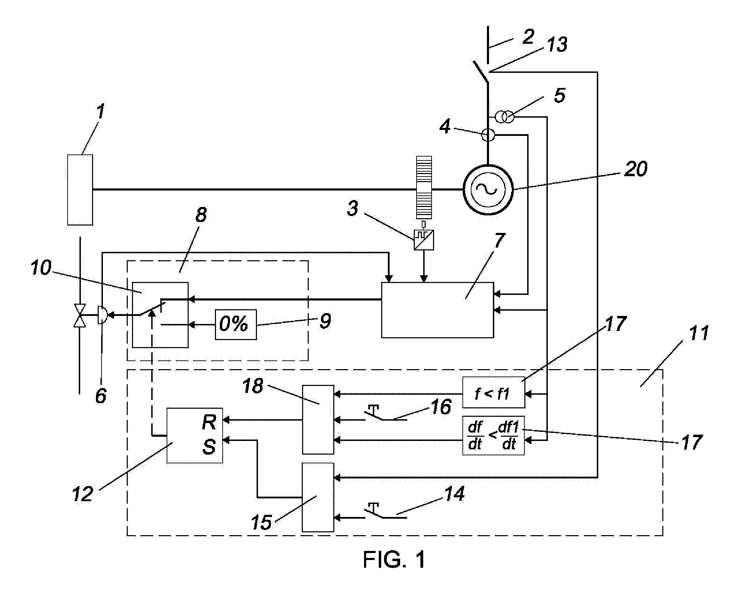

Figure 1 shows a possible configuration of the system for controlling and regulating the speed of Pelton-type hydraulic power units (1) associated with a generator (20) to supply electric power to the grid (2), wherein the following are represented:
- a speed sensor (3) that sends the corresponding signal to the speed of the hydraulic power unit (1),
- a voltage transformer (5) and intensity transformer (4) that provide voltage and intensity signals based on which the electric power supplied by the generator (20) to the grid (2) is calculated,
- an element for controlling flow or the injectors (6) that regulate the water flow turbinated by the hydraulic power unit (1),
- a speed regulator (7) that receives the speed sensor (3) signal, the voltage and intensity signals based on which generator (20) power is calculated and which sends a regulation signal to the flow or injector (6) control elements to control the water flow turbinated by the hydraulic power unit (1),
- an associated switching module (8) at the exit of the speed regulator (7) that receives the regulation signal from the speed regulator (7) and a fixed null flow signal (9), having a switch (10) that selects one of said signals and sends it to the flow or injector (6) control element,
- an operating mode control module (11) incorporating a bistable (12) that chooses between null flow operating mode or speed regulation operating mode, depending on whether the signals of the following variables: grid frequency, grid frequency derivative, angular speed or angular speed derivative or a combination thereof, are below certain established thresholds, the bistable (12) being related at its exit with the switching module (8) to act upon the switch (10), defining either operating mode.

The control module (11) is related to a connection detector (13) that determines whether the hydraulic power unit (1) is connected to the grid (2).

The control module (11) incorporates a first manual or automatic push-button (14) for selecting the null flow operating mode when the connection detector (13) indicates that the generator (20) is connected to the grid (2), in addition to having a first null flow operating mode activation module (15) that receives a signal from the first push-button (14) and connection detector (13), which is connected at its exit to the bistable (12).

The control module (11) incorporates a second manual or automatic push-button (16) and signal comparison modules (17) for comparing frequency, frequency derivative, speed and/or speed derivative signals associated with the voltage transformer (5), wherefrom it receives signals corresponding to these variables, which are connected to a second speed regulation operating control mode activation module (18) that is connected at its exit to the bistable (12).

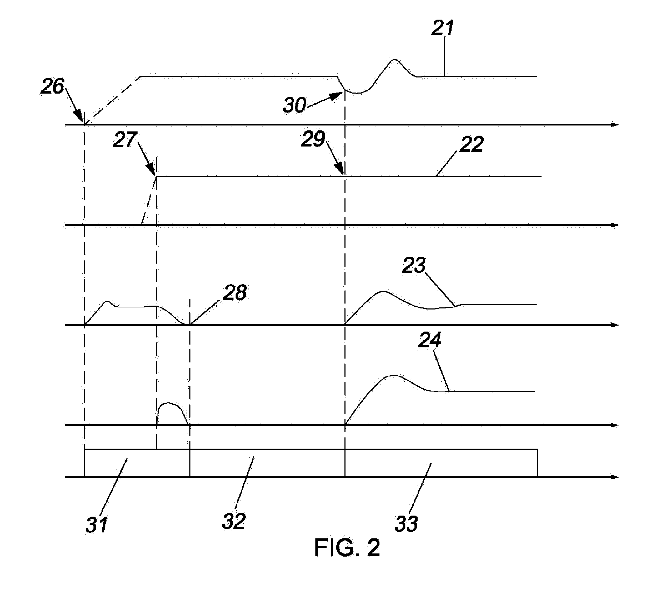

In figure 2 the system variables have been represented: speed (21) of the hydraulic power unit (1), terminal voltage (22) of the generator (20), flow (23) in the hydraulic power unit (1) and electric power (24) of the generator (20) and, in the ordinate, the different operating modes throughout the temporal evolution: startup (31), null flow (32) and frequency regulation (33).

Likewise, within the temporal evolution we have indicated the power unit startup point (26), the point of synchronisation with the grid (27), the injector closure point (28) that corresponds to the passage to null flow operating mode and, finally, the point of passage to the frequency regulation mode (29) caused by a drop in power unit (21) speed below the speed threshold (30).

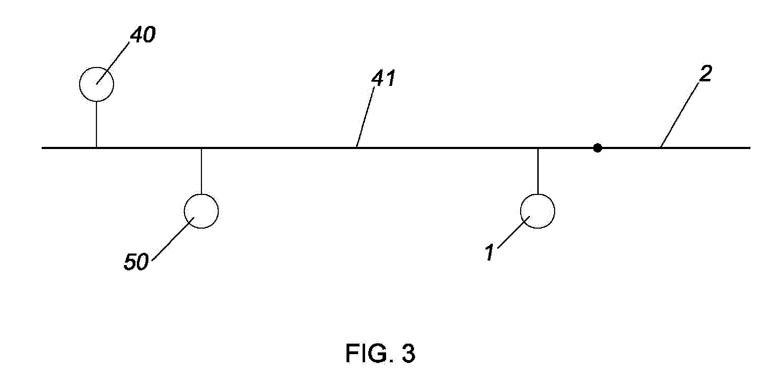

In figure 3, a diagram of the wind-hydro power plant that supplies electric power to the grid has been represented, comprising:
- a wind farm (40) that provides electric power to a power line (41) connected to the grid (2),
- a Pelton-type hydraulic power unit (1) upon which the elevated stored water that supplies electric power to the power line (41) acts,
- a pumped-storage power plant (50) that impels water for elevated storage thereof and is fed by the power line (41).

The wind-hydro power plant incorporates the previously described speed control and regulation system for hydraulic power units (1).

The wind-hydro power plant operates based on a method for controlling and regulating the electric power supplied to the grid, comprising the simultaneous or alternative supply of electric power by a wind farm (40) and/or hydraulic power unit (1) wherein, when the power supplied by the wind farm (40) is sufficient to satisfy grid demand, the hydraulic power unit (1) functions in null flow operating mode, which comprises the closure of the flow control elements (6) that turbinate the hydraulic power unit (1).

On the other hand, when there is a drop in grid frequency or frequency derivative or in speed or speed derivative of the hydraulic power unit (1) or in a combination of these values with respect to certain thresholds, the flow control elements (6) are quickly opened to generate and supply power to the grid (2) almost instantly, functioning under frequency regulation operating mode.

## Claims

1. System for controlling and regulating speed for Pelton-type hydraulic power units (1) associated with a generator (20) for supplying electric power to the grid (2), comprising:
- a speed sensor (3) that provides the signal corresponding to the speed of the hydraulic power unit (1),
- a voltage transformer (5) and intensity transformer (4) that provide voltage and intensity signals based on which the electric power supplied by the generator (20) to the grid (2) is calculated,
- an element for controlling flow (6) or the injectors that project the water flow against the hydraulic power unit (1),
**characterised in that** it additionally comprises:
- a speed regulator (7) that receives the speed sensor (3) signal, the voltage and intensity signals based on which it calculates generator (20) power, which sends a signal from the projected flow, and which sends a regulation signal to the flow control elements (6) to control the flow turbinated by the hydraulic power unit (1),
- an associated switching module (8) at the exit of the speed regulator (7) that receives the regulation signal from the speed regulator (7) and a fixed null flow (9) signal, having a switch (10) that selects one of said signals that will be sent to the flow control element (6),
- an operating mode control module (11) that incorporates a bistable (12) that chooses between null flow operating mode or speed regulation operation mode, depending on whether any of the signals from the following variables: grid frequency, grid frequency derivative, angular speed or angular speed derivative or a combination thereof, is below the established thresholds, the bistable (12) being related at its exit to the switching module (8) to act upon the switch (10), defining either operating mode.

2. System for controlling and regulating the speed of Pelton-type hydraulic power units, according to claim 1, **characterised in that** the control module (11) is related to a connection detector (13) that determines whether or not the hydraulic power unit (1) is connected to the grid (2).

3. System for controlling and regulating the speed of Pelton-type hydraulic power units, according to claim 2, **characterised in that** the control module (11) incorporates a first manual or automatic push-button (14) that allows selection of null flow operating mode when the connection detector (13) indicates that the hydraulic power unit (1) is connected to the grid (2), in addition to having a first null flow operating mode activation module (15) that receives a signal from the first push-button (14) and the connection detector (13) and is connected at its exit to the bistable (12).

4. System for controlling and regulating the speed of Pelton-type hydraulic power units, according to claim 3, **characterised in that** the control module (11) incorporates a second manual or automatic push-button (16) and modules for comparing the frequency, frequency derivative, speed and/or speed derivative signals (17) with the established thresholds, which are associated with the voltage transformer (5), wherefrom it receives the signals corresponding to these variables and which are connected to a second speed regulation operating control mode activation module (18), connected at its exit to the bistable (12).

5. Method for controlling and regulating the speed of Pelton-type hydraulic power units, **characterised in that** it comprises the following phases:
- startup operation, which comprises the regulation of power unit speed startup from zero speed to an assigned speed and connection of the hydraulic power unit to the grid,
- operation under null flow, which comprises closing the flow control elements that make the flow turbinated by the hydraulic power unit null,
- operation under frequency regulation, wherein a drop in the grid frequency or frequency derivative or in the speed or speed derivative of the hydraulic power unit, or a combination of these values with respect to certain thresholds, determines the fast aperture of the flow control elements for generating and supplying power to the grid almost instantly.

6. Wind-hydro power plant that supplies electric power to the grid (2) comprising:
- a wind farm (40) that supplies electric power to a power line (41) connected to the grid (2),
- a hydraulic power unit (1) whereon the elevated stored water that supplies electric power to the power line (41) acts,
- a pumped-storage power plant (50) that impels water for elevated storage thereof and which is fed by the power line (41),
**characterised in that** the hydraulic power unit (1) is of the Pelton type.

7. Wind-hydro power plant, according to claim 6, **characterised in that** it incorporates a system for controlling and regulating the speed of hydraulic power units (1) described in any one of claims 1 to 4.

8. Method for controlling and regulating the electric power supplied to the grid in the wind-hydro power plant described in claims 7 or 8, comprising the simultaneous or alternative supply of electric power by a wind farm (40) and/or hydraulic power unit (1), **characterised in that**:
when the power supplied by the wind farm (40) is sufficient to satisfy grid (2) demand, the hydraulic power unit (1) functions in null flow operating mode, which comprises the closure of flow control elements (6) that project water against the hydraulic power unit (1), and
when there is a drop in the grid frequency or frequency derivative or in the speed or speed derivative of the hydraulic power unit (1) or in a combination of these values with respect to certain thresholds, the flow control elements (6) are quickly opened for generating and supplying power to the grid (2) almost instantly, functioning in frequency regulation operating mode.
